# EUROPÄISCHE PATENTANMELDUNG

(11) **EP 0 898 349 A1**
(43) Veröffentlichungstag der Anmeldung: **24.02.1999**
(21) Anmeldenummer: 97114163.5
(22) Anmeldetag: 16.08.1997
(51) Int. Cl.: H02H 3/04

(54) **Stromüberwachungsvorrichtung und Verfahren zur Stromüberwachung**

(71) Anmelder: Asomatic AG, 6280 Hochdorf (CH)
(72) Erfinder: Rast, Edwin, 6026 Rain (CH); Greter, Philipp, 6005 Luzern (CH)
(74) Vertreter: Kemény AG Patentanwaltbüro

(57) **Zusammenfassung**

Für den Vergleich des in einem Stromleiter (1) fliessenden Stromes mit einem Soll-Stromwert wird der Strom nur dann gemessen, wenn der Stromleiter (1) auch aktiviert ist. Bei einer Unterschreitung des gemessenen Wertes im Vergleich zum Sollwert wird ein Schaltrelais (10) angesteuert, welches von einer Ruhe- oder Grundposition in eine vorzugsweise haltende Fehlerposition schaltet. Dieser Zustand kann vorzugsweise optisch über Anzeigeleuchten (11,12) angezeigt werden und durch die Schaltkontakte (14,15) des Schaltrelais (10) weiteren Geräten als Fehlersignal resp. Fehlerschaltung übertragen werden. Vorzugsweise erfolgt die Strommessung induktiv, womit vorteilhafterweise eine galvanische Trennung zwischen dem Stromleiter (1) und der Messvorrichtung geschaffen wird. Vorteilhafterweise liefert eine derartige Vorrichtung nur dann ein Fehlersignal, wenn auch tatsächlich ein Fehler in der Stromversorgung auftritt und nicht auch dann, wenn die Stromversorgung ausgeschaltet ist.

## Beschreibung

Die vorliegende Erfindung betrifft eine Vorrichtung zur Stromüberwachung nach dem Oberbegriff von Anspruch 1 sowie ein derartiges Verfahren.

Die Ueberwachung von stromführenden Leitungen auf das Vorhandensein eines bestimmten Stromes, d.h. der Prüfung, ob ein bestimmter Soll-Stromwert erreicht ist oder nicht, ist bei vielen elektrischen Anlagen wichtig. So ist beispielsweise die Erkennung einer defekten Lampe in einem parallel geschalteten Netz beispielsweise von grosser Wichtigkeit, wenn es sich dabei beispielsweise um Signalisationsbeleuchtungen handelt, bei denen eine nicht brennende, defekte Lampe eine missverständliche Aussage erbringt. Fällt in einem solchen Netz eine oder mehrere Lampen aus, so kann dies über einen gegenüber dem normalen Stromverbrauch geringeren Stromverbrauch festgestellt werden. D.h. wenn eine gewisser Stromwert in der Leitung unterschritten wird, bedeutet dies, dass mindestens ein Stromverbraucher defekt ist.

Die Feststellung eines defekten Stromverbrauchers ist beispielsweise auch bei der Kunststoffherstellung von grösster Wichtigkeit, da dort die Kunststoffmassen herkömmlicherweise mittels elektrischer Heizungen, also Stromverbrauchern, aufgeheizt werden und die erwärmte Masse anschliessend einem Extruder oder einer Düse zugeführt wird. Diese Aufheizung erfolgt herkömmlicherweise meistens durch eine aus mehreren parallel geschalteten Heizbändern in einer Heizzone. Wenn eines der Heizbänder ausfällt, so kann dies von Aussen praktisch nicht festgestellt werden, aber die Heizzone reagiert dadurch sehr träge und ungenau was zu einer nicht mehr tolerierbaren Qualitätseinbusse oder vollständiger Ausschuss der hergestellten Kunststoffprodukte führen kann.

Herkömmlicherweise wird für die Überwachung solcher Ströme ein Strommessgerät eingesetzt, welches direkt in den Stromkreis eingeschlossen wird, d.h. die Stromzufuhr wird durch das Messgerät durchgeschlauft. Bei Stromkreisen mit hohen Strömen sind hierfür für den Anschluss des Messgerätes Stromwandler notwendig, welche die Messung und Ueberwachung sehr aufwendig und teuer machen. Beim Unterschreiten des vorgegebenen Strom-Sollwertes kann nun beispielsweise durch Ablesen einer entsprechenden Anzeigeeinheit oder durch Erzeugung eines Fehlersignals dieser Zustand erkannt werden und eine entsprechende Korrekturreaktion ausgelöst werden. Beispielsweise wird daraufhin das defekte Teil ausgewechselt.

Das Problem bei diesen herkömmlichen Geräten und Methoden besteht nun aber darin, dass auch ein Fehlersignal erzeugt wird, wenn gar kein Strom mehr fliesst, weil beispielsweise kein Lichtsignal abgegeben werden soll oder weil im obigen Beispiel die Heizbänder aufgrund einer Temperaturregelung wegen Erreichen einer Soll-Temperatur kurzzeitig ausgeschaltet werden. Gerade bei derartigen Heizbändern erfolgen rasch aufeinanderfolgende, kurzzeitige Stromstösse, wenn die Soll-Temperatur erreicht ist. Durch das Ausschalten der Leiter fliesst kein Strom mehr, was bei der Messung und Vergleich mit dem Sollwert ebenfalls zu einem Fehlersignal führt. Es muss nun herkömmlicherweise entweder manuell oder mittels eines separaten Gerätes festgestellt werden, ob das ausgelöste Fehlersignal eine echten Fehlerzustand anzeigt oder aufgrund des Abschaltens der Leitung erzeugt worden ist. Im letzteren Fall wird das Fehlersignal manuell oder automatisch zurückgesetzt und ggf. sofort wieder ein ungültiges Fehlersignal empfangen.

Die Aufgabe der vorliegenden Erfindung bestand nun darin, eine Vorrichtung resp. ein Verfahren zu finden, welches eine einfache und zuverlässige Überwachung eines Soll-Stromes in einem elektrischen Leiter ermöglicht, und bei Unterschreiten des Soll-Stromwertes nur dann zuverlässig ein Fehlersignal auslöst, wenn dies auf das Unterschreiten des gemessenen Stromes aufgrund eines Fehlers zurückzuführen ist.

Diese Aufgabe wird erfindungsgemäss durch eine Vorrichtung mit den Merkmalen nach Anspruch 1 resp. durch eine Verfahren nach Anspruch 7 gelöst. Bevorzugte Ausführungsformen der Erfindung ergeben sich weiter durch die Merkmale der abhängigen Ansprüche 2 bis 6 resp. 8 bis 11.

Vorteilhafterweise wird mit einer erfindungsgemässen Vorrichtung ein Fehlersignal nur dann erzeugt, wenn die Leitung auch tatsächlich einen zu überwachenden Stromfluss liefern soll und dieser den eingestellten Soll-Wert unterschreitet. Wenn dies nicht der Fall ist, wird auch kein Fehlersignal erzeugt, indem die Messungen dann nicht durchgeführt werden, wenn der Stromleiter abgeschaltet ist. Das Aktivierungssignal für die Messung kann beispielsweise bei unkritischen Anwendungen durch den Stromleiter selbst erzeugt werden, resp. von diesem her stammen oder von der Schaltvorrichtung des Leiters her stammen, um auch einen Totalausfall als Fehler anzeigen zu können.

Vorzugsweise erfolgt vorteilhafterweise die Strommessung induktiv und damit unter vollständiger galvanischer Trennung gegenüber dem zu überwachenden Leiter. Durch dieses Messprinzip können Ströme bis zu 50 Ampère ohne Sromwandler überwacht werden. Dies macht die Vorrichtung sehr universell einsetzbar, da mit derselben Vorrichtung kleine und grosse Stromwerte gemessen werden können. Weiter werden damit vorteilhafterweise teure Stromwandler und Anzeigegeräte eingespart. Ein weiterer Vorteil der Vorrichtung liegt darin, dass sie sowohl für gleich- wie auch für wechselstromführende Leitungen verwendet werden kann.

Die erfindungsgemässe Vorrichtung ist einfach im Aufbau und eignet sich insbesondere auch für die Nachrüstung von bereits installierten Anlagen. Mit einem einzigen Gerät kann damit zuverlässig ein unzulässiges Unterschreiten des Stromes in einem Stromleiter festgestellt und angezeigt resp. signalisiert werden. Selbstverständlich kann eine derartige Vorrichtung auch umgekehrt zur Ueberwachung des Ueberschreitens eines bestimmten Strom-Maximalwertes eingesetzt werden, indem das Schaltrelais umgekehrt angesteuert wird.

Ein Ausführungsbeispiel der vorliegenden Erfindung wird nachstehend anhand von Figuren der beiliegenden Zeichnungen noch näher erläutert. Es zeigen
Fig. 1 die Ansicht des Gehäuses einer erfindungsgemässen Vorrichtung mit induktiver Strommessung; und
Fig. 2 schematisch den Schaltungsaufbau der erfindungsgemässen Vorrichtung nach Figur 1.

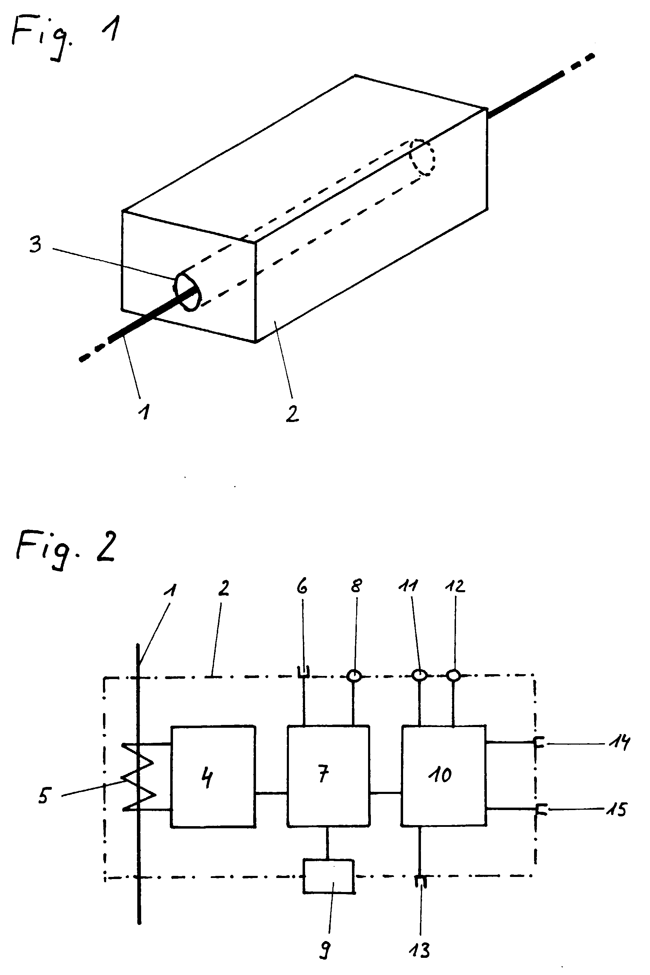

Figur 1 zeigt schematisch die Ansicht einer erfindungsgemässen Vorrichtung mit induktiver Strommessung, bei welcher der zu messende Stromleiter 1 durch einen vom Gehäuse 2 der Vorrichtung vollständig umschlossenen Durchgangskanal 3 hindurchgeführt ist.

In Figur 2 ist nun schematisch der Schaltungsaufbau der Vorrichtung dargestellt. Der im Stromleiter 1 fliessende Strom wird induktiv mittels des Strommessmoduls 4 mit der Messschlaufe 5 erfasst. Diese Messung wird allerdings nur dann durchgeführt, wenn ein positives Aktivierungssignal am Messaktivierungseingang 6 anliegt. Das Aktivierungssignal wird der Vergleichsschaltung 7 zugeführt, welche die Messung auslöst resp. aussetzt. Die Vergleichsschaltung 7 ist derart aufgebaut, dass das Aktivierungssignal sowohl als Wechsel- wie als Gleichspannung vorliegen kann. Vorzugsweise betragen die Werte für das Aktivierungssignal 3 - 28 V Gleichspannung oder 110 - 250 V Wechselspannung. Hierfür können beispielsweise zwei getrennte Anschüsse vorhanden sein. Wenn ein positives Aktivierungssignal vorliegt, wird dies vorzugsweise durch eine Leuchtdiode 8 angezeigt, welche sich beispielsweise an der Frontplatte des Gehäuses 3 befindet.

Zur Einstellung des Soll-Vergleichswertes ist ein Einstellorgan, vorzugsweise ein Potentiometer 9 vorgesehen, welches ebenfalls an der Gehäusefront angeordnet sein kann und vorteilhafterweise eine Einstellskala aufweist.

Mit der Vergleichsschaltung 7 wird nun ein Schaltrelais 10 angesteuert, welches eine Ruhestellung und eine haltbare Schaltstellung aufweist. Die Ruhestellung wird vorzugsweise durch eine Leuchtdiode 11 und die Schaltstellung durch eine Leuchtdiode 12 optisch angezeigt. Wenn der mit dem Strommessmodul 4 gemessene Strom kleiner ist als der über das Potentiometer 9 eingestellte Sollwert, so schaltet die Vergleichsschaltung 7 das Schaltrelais 10 von der Ruhestellung in die Schaltstellung. D.h. die Schaltstellung zeigt einen Fehler des Stromflusses des Stromleiters 1 an.

Diese Fehlerstellung des Schaltrelais 10 wird nun gehalten, bis diese durch ein Rückstellsignal in die Ruhestellung zurückgeschaltet wird. Das Rückstellsignal kann nun entweder von der Vergleichsschaltung 7 her stammen, sobald bei anliegendem Aktivierungssignal der gemessene Strom im Stromleiter 1 über dem Sollwert liegt oder extern über den Anschluss 13 eingespiesen werden. Der zweite Fall wird vorzugsweise dann eingesetzt, wenn mit wenig Störungen zu rechnen ist und diese auch jeweils möglichst unmittelbar behoben werden sollen resp. entsprechende Massnahmen ausgelöst werden sollen. Der erste Fall ist insbesondere dort angezeigt, wo primär die Fehlerzustände angezeigt werden sollen, aber nicht sofort durch einen externen Eingriff behoben werden müssen.

Um andere Geräte über den Fehlerzustand zu informieren resp. Aktionen auszulösen sind die Schaltanschlüsse 14 und 15 des Schaltrelais 10 vorgesehen.

## Patentansprüche

1. Vorrichtung zur Ueberwachung eines Soll-Stromwertes einer elektrischen Leitung (1) mit einer Strommessvorrichtung, dadurch gekennzeichnet, dass sie in einem Gehäuse (2) ein Strommessmodul (4), eine damit verbundene Vergleichsschaltung (7) mit Einstellorgan (9) zur Festlegung eines Vergleichswertes und Anschluss (6) für ein von Aussen aufschaltbares Aktivierungssignal, sowie ein durch die Vergleichsschaltung (7) angesteuertes Schaltrelais (10) mit nach Aussen geführten Schaltanschlüssen (14,15) aufweist.

2. Vorrichtung nach Anspruch 1, dadurch gekennzeichnet, dass im Gehäuse (2) ein Durchgangskanal (3) für die elektrische Leitung (1) angeordnet ist, und das Strommessmodul (4) eine um den Durchgangskanal (3) angeordnete Messschlaufe für die induktive Messung des Stroms in der elektrischen Leitung (1) aufweist.

3. Vorrichtung nach Anspruch 1 oder 2, dadurch gekennzeichnet, dass das Schaltrelais (10) ein selbsthaltendes Relais ist.

4. Vorrichtung nach einem der Ansprüche 1 bis 3, dadurch gekennzeichnet, dass optische Anzeigemittel (8,11,12) zur Anzeige des Zustandes des Schaltrelais (10) sowie eines anliegenden Aktivierungssignals vorhanden sind.

5. Vorrichtung nach Anspruch 4, dadurch gekennzeichnet, dass die Anzeigemittel (8,11,12) Leuchten, vorzugsweise verschiedenfarbige Leuchtdioden umfassen.

6. Vorrichtung nach einem der Ansprüche 1 bis 5, dadurch gekennzeichnet, dass die Vergleichsschaltung (7) für Gleich- oder Wechselspannungs-Aktivierungssignale ausgelegt ist und vorzugsweise dafür zwei getrennte Anschlüsse (6) aufweist.

7. Verfahren zur Ueberwachung eines Soll-Stromwertes einer elektrischen Leitung (1) mittels einer Strommessvorrichtung, dadurch gekennzeichnet, dass nur bei Anliegen eines Mess-Aktivierungssignals der Strom mittels eines Strommessmoduls (4) gemessen wird und in einer Vergleichsschaltung (7) mit einem einstellbaren Sollwert verglichen wird, und bei kleinerem gemessenem Wert als der Sollwert ein Fehlersignal erzeugt wird und durch das Fehlersignal ein Schaltrelais (10) in eine Fehlerstellung geschaltet wird.

8. Verfahren nach Anspruch 7, dadurch gekennzeichnet, dass das Fehlersignal das Schaltrelais (10) in eine haltende Fehlerstellung schaltet.

9. Verfahren nach Anspruch 7 oder 8, dadurch gekennzeichnet, dass ein Rückstellsignal das Schaltrelais (10) in eine haltende Ruhestellung schaltet.

10. Verfahren nach einem der Ansprüche 7 bis 9, dadurch gekennzeichnet, dass bei Ueberschreiten des Sollwertes durch den gemessenen Strom das Störungsrelais (10) in eine haltende Ruhestellung geschaltet wird.

11. Verfahren nach einem der Ansprüche 7 bis 10, dadurch gekennzeichnet, dass das Fehlersignal und das Aktivierungssignal optisch mittels Anzeigeleuchten (8,11,12), vorzugsweise Leuchtdioden, angezeigt werden.
